# EUROPÄISCHE PATENTSCHRIFT

(11) **EP 1 151 358 B1**
(45) Veröffentlichungstag und Bekanntmachung des Hinweises auf die Patenterteilung: **06.10.2004**
(21) Anmeldenummer: 99964425.5
(22) Anmeldetag: 10.12.1999
(51) Int. Cl.: G05B 19/418

(54) **VERTEILES STEUERUNGSSYSTEM MIT LAGEBESTIMMUNG DER KOMPONENTEN**
DISTRIBUTED CONTROL SYSTEM WITH DETERMINATION OF THE POSITION OF COMPONENTS
SYSTEME DE COMMANDE DECENTRALISEE AVEC DETERMINATION DE LA POSITION DES COMPOSANTS D'UNE INSTALLATION

(30) Priorität: 14.12.1998 DE 19857649
(43) Veröffentlichungstag der Anmeldung: 07.11.2001
(73) Patentinhaber: SIEMENS AKTIENGESELLSCHAFT, 80333 München (DE)
(72) Erfinder: HEIDEL, Roland, D-76870 Kandel (DE); DÖBRICH, Udo, D-76703 Karlsbad (DE)
(86) Internationale Anmeldenummer: PCT/DE1999/003956
(87) Internationale Veröffentlichungsnummer: WO 2000/036478

(56) Entgegenhaltungen:
- EP-A- 0 850 748
- DE-A- 19 514 223
- DE-A- 19 624 929
- US-A- 5 485 161

## Beschreibung

Die Erfindung betrifft ein verteiltes Steuerungssystem zur Realisierung einer automatisierungstechnischen Anlage nach dem Oberbegriff des Anspruchs 1 sowie ein Feldgerät für ein derartiges System nach dem Oberbegriff des Anspruchs 5.

Aus der EP 0 850 748 A2 ist eine Anordnung mit einem Schweißgerät bekannt, bei welcher zur genauen Identifizierung eines protokollierten Schweißvorganges mit Hilfe eines GPS (General Positioning System) die Lage des Schweißgerätes erfasst und mit Stadtplandaten kombiniert wird.

Aus der US-PS 5 485 161 ist ein Geschwindigkeitserfassungssystem für Fahrzeuge bekannt, bei welchem GPS-Lagedaten vom Fahrzeug an einen entfernten Rechner mit Straßenplan übermittelt werden, der die zulässige Höchstgeschwindigkeit auf der jeweiligen Straße zur Geschwindigkeitssteuerung an das Fahrzeug zurückmeldet.

Aus der DE 195 14 223 A1 ist ein Verfahren zur Einsatzoptimierung von Landmaschinen bekannt, bei welchem die Landmaschinen ihre GPS-Lagedaten an einen zentralen Rechner übertragen.

Aus der DE 196 24 929 A1 ist ein verteiltes Steuerungssystem bekannt, bei welchem Sensoren und Aktoren durch ein Bussystem als Kommunikationskanal mit einer Projektierungseinrichtung, in welcher eine Bedien- und Beobachtungsoberfläche erzeugt wird, verbunden sind. Es werden mehrere Möglichkeiten zur Projektierung und Inbetriebnahme des verteilten Steuerungssystems angegeben. Eine technisch einfache aber zeitaufwendige und fehlerbehaftete Möglichkeit ist es, zunächst die Anlagenkomponenten einzeln zu programmieren und getrennt hiervon mit der Projektierungseinrichtung einen Anlagenplan zu erstellen, der Informationen über die Funktion und die Lage der Komponente innerhalb der Anlage enthält. Zur Verringerung des Programmieraufwands wird dort vorgeschlagen, die Anlagenkomponenten jeweils mit einem Speicher für komponentenspezifische Daten zu versehen. In den Speicher ist die jeweilige Funktion der Anlagenkomponente, also z. B. Regler, und ihre Einbindung in die automatisierungstechnische Anlage abspeicherbar. Die Einbindung wird durch die Adressen anderer Anlagenkomponenten, mit denen die jeweilige Komponente in Wechselwirkung steht, beschrieben. Für den Fall eines Reglers sind dies die Adressen des Sollwertgebers und des Istwertgebers, von denen der Regler seine Eingangswerte erhält, sowie die Adresse des von dem Regler zu beeinflussenden Stellglieds. Diese komponentenspezifischen Daten werden von den Anlagenkomponenten über den Datenbus an die Projektierungseinrichtung übertragen, die anhand dieser Daten automatisch eine Bedien- und Beobachtungsoberfläche erstellt. Nachteilig dabei ist, daß sich die Programmierung der einzelnen Anlagenkomponenten vergleichsweise aufwendig gestaltet.

Aus der US-PS 5 519 878 ist ein weiteres verteiltes Steuerungssystem bekannt. Zur Implementierung des verteilten Steuerungssystems wird vor der Installation einer Anlagenkomponente von einer Projektierungseinrichtung ein eindeutiger Bezeichner für die Anlagenkomponente angefordert. Der eindeutige Bezeichner wird als Barcode auf ein Klebeschild ausgedruckt, das vor Ort auf einen in Papierform vorliegenden Anlagenplan, der die räumliche Lage der Anlagenkomponenten innerhalb der Anlage wiedergibt, an die Position der Anlagenkomponente geklebt wird. Die Projektierungseinrichtung ist mit einem Bildschirm zur Darstellung des Anlagenplans und einer Leseeinrichtung zum automatischen Einlesen des Barcodes ausgestattet. Der Barcode, der den eindeutigen Bezeichner einer Anlagenkomponente wiedergibt, wird mit der Leseeinrichtung automatisch eingelesen und anhand des dargestellten Anlagenplans der jeweiligen Position der Anlagenkomponente auf der grafischen Darstellung zugeordnet. Anhand der Bezeichner der einzelnen Anlagenkomponenten kann die Konfiguration eines Netzwerks, das die Anlagenkomponenten zur Datenübertragung miteinander verbindet, durchgeführt werden. Nachteilig dabei ist, daß das Aufkleben der Klebeetiketten auf den in Papierform vorliegenden Anlagenplan vor Ort sowie die Zuordnung der eindeutigen Bezeichner zu den einzelnen Anlagenkomponenten in einer grafischen Darstellung der Anlage auf einem Bildschirm manuell durchgeführt werden muß und somit fehlerbehaftet ist.

Der Erfindung liegt die Aufgabe zugrunde, ein verteiltes Steuerungssystem sowie ein Feldgerät für ein derartiges System zu schaffen, die in einfacher Weise und mit verbesserter Fehlersicherheit zu projektieren sind.

Zur Lösung dieser Aufgabe weist das neue verteilte Steuerungssystem der eingangs genannten Art die im kennzeichnenden Teil des Anspruchs 1 angegebenen Merkmale auf. In den weiteren Ansprüchen sind vorteilhafte Ausgestaltungen des verteilten Steuerungssystems sowie ein Feldgerät, das für ein derartiges verteiltes Steuerungssystem geeignet ist, beschrieben.

Die Erfindung hat den Vorteil, daß durch die Übertragung der Lage der einzelnen Anlagenkomponenten als komponentenspezifische Daten, welche die räumlichen Koordinaten repräsentieren, eine eindeutige Identifizierbarkeit der Anlagenkomponenten anhand dieser Daten als Kennzeichner gegeben ist. Eine Vergabe gleicher komponentenspezifischer Daten am zwei verschiedene Anlagenkomponenten ist wegen der sich immer unterscheidenden räumlichen Koordinaten nicht möglich. Daraus ergibt sich eine verbesserte Fehlersicherheit bei der Projektierung. Da die räumlichen Koordinaten von der Anlagenkomponente über den Kommunikationskanal an die Projektierungseinrichtung übertragen werden, entfällt auch eine manuelle Mehrfacheingabe der Daten und eine Datenkonsistenz ist somit gewährleistet. Anhand der komponentenspezifischen Daten, welche die jeweilige Anlagenkomponente eindeutig kennzeichnen, ist in einfacher Weise eine automatische Vergabe eindeutiger Adressen in der Projektierungseinrichtung möglich. Wenn die Anlagenkomponenten mit einer Einrichtung zur automatischen Bestimmung ihrer Lage, insbesondere mit einem GPS-Empfänger, versehen werden, ist zur Ermittlung der räumlichen Koordinaten keinerlei Bedienaufwand erforderlich. D. h., eine eventuell fehlerbehaftete, manuelle Eingabe entfällt völlig. In den Fällen, in denen eine Ausstattung einer Anlagenkomponente mit einer derartigen Einrichtung einen unverhältnismäßig hohen Aufwand bedeuten würde, kann an der Anlagenkomponente in preiswerter Ausgestaltung und mit geringem Aufwand eine Einrichtung zur Eingabe ihrer Lage vorgesehen werden. Dabei besteht die Möglichkeit einer manuellen Eingabe oder einer Eingabe durch Übertragung der Daten über eine Schnittstelle, wobei die räumlichen Koordinaten vorteilhaft durch ein portables Gerät, das wiederum einen GPS-Empfänger enthalten kann, automatisch bestimmt werden.

In vorteilhafter Weise kann die Projektierungseinrichtung mit Mitteln zur Erstellung eines Anlagenplans versehen werden, der nach Art eines Rohr- und Installationsschemas Informationen über die räumliche Lage der Anlagenkomponenten enthält. Wenn zudem die Projektierungseinrichtung dazu ausgebildet ist, einer Anlagenkomponente, deren Lage sie als komponentenspezifische Daten empfangen hat, eine am Kommunikationskanal eindeutige physikalische Adresse zuzuweisen und diese zur Anlagenkomponente zu übertragen, so kann in vorteilhafter Weise die eindeutige Identifikation der Anlagenkomponente über ihre Raumkoordinaten zur Vergabe eindeutiger Adressen verwendet werden. Eine Programmierung oder Einstellung der Adressen in den einzelnen Komponenten oder in der Projektierungseinrichtung ist somit nicht erforderlich. Zur Codierung der so durch die Projektierungseinrichtung erzeugten Adresse genügen geringere Datenmengen als zur Codierung der räumlichen Lage. Zur Kommunikation während des späteren Betriebs können somit vorteilhaft kürzere Adressen verwendet werden.

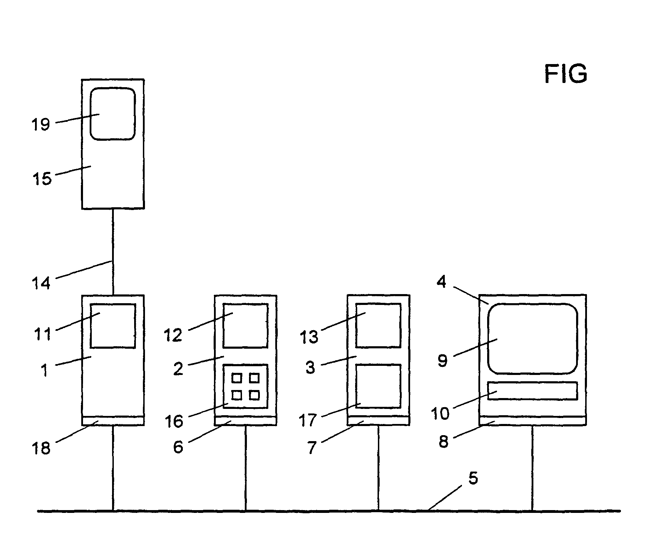

Anhand der Figur, in der ein Ausführungsbeispiel der Erfindung dargestellt ist, werden im folgenden die Erfindung sowie Ausgestaltungen und Vorteile näher erläutert.

Die Figur zeigt ein verteiltes Steuerungssystem mit Anlagenkomponenten 1, 2 und 3 sowie mit einer Projektierungseinrichtung 4, die über einen Bus 5 als Kommunikationskanal zur Datenübertragung miteinander verbunden sind. Zur Durchführung der Kommunikation ist als Bestandteil der Anlagenkomponenten 1, 2 und 3 sowie der Projektierungseinrichtung 4 jeweils eine Kommunikationseinrichtung 18, 6, 7 bzw. 8 integriert. Bei den Anlagenkomponenten 1, 2 und 3 kann es sich beispielsweise um einen Istwertgeber, einen Regler bzw. ein Stellglied handeln. Die Einrichtung 4 dient zur Projektierung der Kommunikation zwischen den einzelnen Komponenten. Sie kann durch einen leistungsfähigen Personal Computer realisiert werden, auf welchen ein geeignetes Programm als Software-Werkzeug zur Erstellung eines Rohr- und Installationsschemas als Anlagenplan, der Informationen über die Funktion und die räumliche Lage der Komponenten innerhalb der Anlage enthält, geladen ist. Der Anlagenplan ist auf einem Bildschirm 9 der Projektierungseinrichtung 4 darstellbar. Die zur Erstellung des Anlagenplans erforderlichen Eingaben können durch eine Tastatur 10 durchgeführt werden. In den Anlagenkomponenten 1, 2 und 3 ist jeweils ein Speicher 11, 12 bzw. 13 für komponentenspezifische Daten enthalten. Als komponentenspezifische Daten werden in die Speicher 11, 12 und 13 jeweils Daten, welche die räumlichen Koordinaten der jeweiligen Anlagenkomponente 1, 2 bzw. 3 repräsentieren, hinterlegt. Weitere komponentenspezifische Daten können die Funktionsbezeichnung, also z. B. Istwertgeber, Regler oder Stellglied, die physikalische Busadresse, die Einbindung in das verteilte Steuerungssystem, Angaben zu dem jeweiligen Gerätetyp, Hersteller oder dergleichen sein. An die Anlagenkomponente 1 ist über eine Schnittstelle 14 ein portables Gerät 15 angeschlossen, das mit einer Einrichtung zur Bestimmung der räumlichen Lage der Anlagenkomponente 1 ausgestattet ist und die Daten, welche die räumlichen Koordinaten repräsentieren, über die Schnittstelle 14 in den Speicher 11 der Anlagenkomponente 1 einschreibt. Anstelle der Schnittstelle 14 ist bei der Anlagenkomponente 2 eine Eingabetastatur zur manuellen Eingabe der räumlichen Koordinaten, die zuvor beispielsweise durch das portable Gerät 15 ermittelt und von einer Anzeige 19 abgelesen wurden, vorgesehen. Die Anlagenkomponente 3 ist bereits mit einer Einrichtung 17 zur automatischen Lagebestimmung ausgestattet, so daß zum Einschreiben der komponentenspezifischen Daten in den Speicher 13 keine manuelle Eingabe und auch keine Handhabung eines zusätzlichen portablen Geräts erforderlich ist. Die Anlagenkomponenten 1, 2 und 3 senden bei Anlauf der Anlage jeweils ein Telegramm über den Kommunikationskanal 5 zur Projektierungseinrichtung 4, das die komponentenspezifischen Daten des Speichers 11, 12 bzw. 13 enthält. In dieser Phase kann die Projektierungseinrichtung 4 beispielsweise mit einem vordefinierten Broadcast-Telegramm angerufen werden. Vorteilhaft können dabei zur Erhöhung der Verfügbarkeit mehrere Projektierungseinrichtungen am Kommunikationskanal vorgesehen werden, die ihre Aktivitäten in geeigneter Weise untereinander abstimmen. Dadurch wird eine Redundanz der Projektierungseinrichtung 4 erreicht. Eine andere Möglichkeit ist die Vergabe einer vordefinierten Adresse für die Projektierungseinrichtung 4. In der Projektierungseinrichtung 4 liegt ein Anlagenplan mit Informationen über die Funktion und die räumliche Lage der Komponenten vor, der zuvor erstellt wurde. Alternativ dazu kann der Anlagenplan auf einem anderen Gerät erstellt und über eine nicht dargestellte Schnittstelle in die Projektierungseinrichtung 4 eingegeben werden. Über die räumlichen Koordinaten werden die komponentenspezifischen Daten in den Telegrammen den im Anlagenplan projektierten Komponenten zugewiesen. Über die räumlichen Koordinaten ist in vorteilhafter Weise eine eindeutige Identifizierung der einzelnen Komponenten möglich.

Mobile, nicht in dem Anlagenplan mit festen Koordinaten versehene Geräte enthalten in den komponentenspezifischen Daten eine entsprechende Kennung. Für derartige Komponenten wird in der Projektierungseinrichtung 4 ein dynamischer Anlagenplan gehalten.

Die Projektierungseinrichtung 4 erzeugt für jede Anlagenkomponente eine physikalische Adresse, mit welcher diese am Bus 5 adressierbar ist. Alternativ kann selbstverständlich auch eine manuelle Zuweisung der Adressen vorgenommen werden. In Antworttelegrammen werden die Adressen jeweils den einzelnen Anlagenkomponenten mitgeteilt. Im späteren Betrieb des verteilten Steuerungssystems werden zur Adressierung lediglich die physikalischen Adressen verwendet.

Die Einrichtung 17 zur automatischen Bestimmung der Lage der Anlagenkomponente 3 kann beispielsweise einen GPS-Empfänger enthalten. In den Fällen, in denen die Empfangsbedingungen für Satellitensignale, z. B. aufgrund von abschirmenden Gebäudeteilen, schlecht sind, können zusätzliche, GPS-Signale erzeugende Sender im Bereich des verteilten Steuerungssystems angebracht werden, die GPS nachbilden. Auf diese Weise sind vorteilhaft handelsübliche GPS-Empfänger einsetzbar, ohne daß aufwendige technische Änderungen vorgenommen werden müssen.

Alternativ können die einzelnen Anlagenkomponenten Ortungssignale aussenden, die durch ein im Bereich des verteilten Steuerungssystems angebrachtes Ortungssystem nach Art einer Kreuzpeilung ausgewertet werden. Die ermittelten Lagekoordinaten werden anschließend über eine Funkstrecke entsprechend der Schnittstelle 14 oder durch manuelle Eingabe mit einer Tastatur 16 in die Speicher der einzelnen Anlagenkomponenten eingeschrieben. In dem beschriebenen Ausführungsbeispiel wird ein Bus 5 als Kommunikationskanal verwendet. Wesentlich für die Erfindung ist jedoch lediglich, daß die Anlagenkomponenten an einen Kommunikationskanal anschließbar sind, d. h. Daten miteinander austauschen können. Die Kommunikation kann beispielsweise drahtgebunden, mit Lichtwellenleiter, über Funk- oder Infrarotstrecken erfolgen.

## Patentansprüche

1. Verteiltes Steuerungssystem zur Realisierung einer automatisierungstechnischen Anlage
- mit Feldgeräten als Anlagenkomponenten (1, 2, 3), wie z. B. Regler (2), Istwertgeber (1) oder Stellglieder (3), die mit einem Speicher (11, 12, 13) für komponentenspezifische Daten versehen sind,
- mit einer Projektierungseinrichtung (4), die Mittel zur Eingabe oder Erstellung eines Anlagenplans aufweist, der zumindest Informationen über die Lage der Komponenten (1, 2, 3) innerhalb der Anlage enthält, und
- mit einem Kommunikationskanal (5), an welchen die Anlagenkomponenten (1, 2, 3) und die Projektierungseinrichtung (4) zum gegenseitigen Austausch von Daten anschließbar sind,
**dadurch gekennzeichnet,**
**daß** die Anlagenkomponenten (1, 2, 3) dazu ausgebildet sind, ihre Lage als komponentenspezifische Daten, welche die räumlichen Koordinaten repräsentieren, an die Projektierungseinrichtung (4) zu übertragen,
**daß** die Projektierungseinrichtung (4) dazu ausgebildet ist, einer Anlagenkomponente (1, 2, 3), deren Lage sie als komponentenspezifische Daten empfangen hat, eine am Kommunikationskanal (5) eindeutige physikalische Adresse zuzuweisen und diese zur Anlagenkomponente (1, 2, 3) zu übertragen.

2. Steuerungssystem nach Anspruch 1, **dadurch gekennzeichnet, daß** die Anlagenkomponenten (3) mit einer Einrichtung (17) zur automatischen Bestimmung ihrer Lage, insbesondere mit einem GPS-Empfänger, versehen sind.

3. Steuerungssystem nach Anspruch 1 oder 2, **dadurch gekennzeichnet, daß** die Anlagenkomponenten (1, 2) eine Einrichtung (14, 16) zur Eingabe ihrer Lage aufweisen.

4. Steuerungssystem nach einem der vorhergehenden Ansprüche,
**dadurch gekennzeichnet,**
- **daß** die Projektierungseinrichtung (4) Mittel zur Erstellung eines Anlagenplans aufweist, der nach Art eines Rohrund Installationsschemas Informationen über die räumliche Lage der Anlagenkomponenten (1, 2, 3) enthält.

5. Feldgerät, wie z. B. Istwertgeber (1), Regler (2) oder Stellglied (3), für ein verteiltes Steuerungssystem nach einem der vorhergehenden Ansprüche, das mit einem Speicher (11, 12, 13) für komponentenspezifische Daten und mit einer Kommunikationseinrichtung (18, 6, 7) zum Anschluß an einen Kommunikationskanal (5) versehen ist, **dadurch gekennzeichnet, daß** das Feldgerät (1, 2, 3) dazu ausgebildet ist, seine Lage als komponentenspezifische Daten, welche die räumlichen Koordinaten repräsentieren, über den Kommunikationskanal (5) an die Projektierungseinrichtung (4) zu übertragen und eine dem Feldgerät von der Projektierungseinrichtung (4) zugewiesene, am Kommunikationskanal (5) eindeutige physikalische Adresse zu empfangen.

## Claims

1. Distributed control system for implementing an automation technology system
- with field devices as system components (1, 2, 3), such as controllers (2), actual value generators (1) or actuators (3) which are provided with a memory (11, 12, 13) for component-specific data,
- with a project planning device (4) featuring means for entering or creating a system plan containing at least information about the position of the components (1, 2, 3) within the system, and
- with a communication channel (5) to which the system components (1, 2, 3) and the project planning device (4) can be connected for mutual exchange of data,
**characterized in that**
the system components (1, 2, 3) are embodied so as to transfer to the project planning device (4) their position as component-specific data which represents the spatial coordinates,
the project planning device (4) is embodied to assign to a system component (1, 2, 3) for which it has received the position as component-specific data a unique physical address on the communication channel (5) and to transmit this to the system component (1, 2, 3).

2. Control system in accordance with Claim 1, **characterized in that** the system components (3) are provided with of device (17) for automatically determining their position, especially with a GPS receiver.

3. Control system in accordance with Claim 1 or 2, **characterized in that**, the system components (1, 2) feature a device (14, 16) for entering their position.

4. Control system in accordance with one of the previous claims,
**characterized in that**
- the project planning device (4) features means for creating a system plan which in accordance with type of a pipe and installation scheme contains information about the spatial position of the system components (1, 2, 3).

5. Field device, for example actual value generator (1), controller (2) or actuator (3), for a distributed control system in accordance with one of the previous claims which is provided with a memory (11, 12, 13) for component-specific data and with a communication device (18, 6, 7) for connecting a communication channel (5), **characterized in that** the field device (1, 2, 3) is embodied to transmit its position as component-specific data which represents the spatial coordinates via the communication channel (5) to the project planning device (4) and to receive a physical address assigned to the field device by the project planning device (4) and which is a unique address on the communication channel (5).

## Revendications

1. Système de commande réparti pour la réalisation d'une installation de technique d'automatisation,
- ayant des outils comme composants d'installation (1, 2, 3), par exemple des régulateurs (2), des générateurs de valeurs réelles (1) ou des éléments de réglage (3), qui sont munis d'une mémoire (11, 12, 13) pour des données spécifiques aux composants,
- ayant un dispositif de projection (4), qui comporte des moyens pour l'entrée ou l'élaboration d'un plan d'installation qui contient au moins des informations concernant la position des composants (1, 2, 3) à l'intérieur de l'installation, et
- ayant un canal de communication (5), auquel les composants d'installation (1, 2, 3) et le dispositif de projection (4) peuvent être raccordés pour l'échange mutuel de données,
**caractérisé par le fait que**
les composants d'installation (1, 2, 3) sont conçus pour transmettre leur position, en tant que données spécifiques aux composants, qui représentent les coordonnées spatiales, au dispositif de projection (4),
et le dispositif de projection (4) est conçu pour attribuer à un composant d'installation (1, 2, 3) dont il a reçu la position sous forme de données spécifiques aux composants, une adresse physique unique sur le canal de communication (5) et pour transmettre celle-ci au composant d'installation (1, 2, 3).

2. Système de commande selon la revendication 1, **caractérisé par le fait que** les composants d'installation (3) sont munis d'un dispositif (17) pour la détermination automatique de leur position, notamment d'un récepteur GPS.

3. Système de commande selon la revendication 1 ou 2, **caractérisé par le fait que** les composants d'installation (1, 2) comportent un dispositif (14, 16) pour l'entrée de leur position.

4. Système de commande selon l'une des revendications précédentes, **caractérisé par le fait que** le dispositif de projection (4) comporte des moyens pour l'élaboration d'un plan d'installation qui contient à la manière d'un schéma d'installation des informations concernant la position spatiale des composants d'installation (1, 2, 3).

5. Outil, par exemple générateur de valeurs réelles (1), régulateurs (2) ou éléments de réglage (3), pour un système de commande réparti selon l'une des revendications précédentes, qui est muni d'une mémoire (11, 12, 13) pour des données spécifiques aux composants et d'un dispositif de communication (18, 6, 7) pour le raccordement à un canal de communication (5), **caractérisé par le fait que** l'outil (1, 2, 3) est conçu pour transmettre sa position, en tant que données spécifiques aux composants, qui représentent les coordonnées spatiales, au dispositif de projection (4) par l'intermédiaire du canal de communication (5) et pour recevoir une adresse physique attribuée à l'outil par le dispositif de projection (4) et unique sur le canal de communication (5).
